# EUROPEAN PATENT SPECIFICATION

(11) **EP 1 752 628 B1**
(45) Date of publication and mention of the grant of the patent: **02.07.2008**
(21) Application number: 05113103.5
(22) Date of filing: 30.12.2005
(51) Int. Cl.: F01M 5/00, G05D 23/02

(54) **Thermostatic valve for lubrification circuits of internal-combustion engines for motor vehicles**
Thermostatventil für Schmierkreislauf eines Verbrennungsmotors eines Kraftfahrzeugs
Vanne thermostatique pour circuit de lubrification d'un moteur à combustion interne d'un véhicule automobile

(30) Priority: 13.07.2005 IT TO20050483
(43) Date of publication of application: 14.02.2007
(73) Proprietor: Behr Thermot-tronik Italia S.P.A., 10123 Torino (IT)
(72) Inventor: Triberti, Franco, 10098, Rivoli (TO) (IT)
(74) Representative: Buzzi, Franco

(56) References cited:
- GB-A- 572 807
- US-A- 4 512 300
- US-A- 4 537 346

## Description

The present invention relates to thermostatic valves for lubrication circuits of internal-combustion engines for motor vehicles, of the type comprising: a body having an inlet, and a first outlet and a second outlet, which can be connected, respectively, to a heat-exchange unit and to a by-pass line; and a thermostatic-valve unit set within the body. Said thermostatic-valve unit traditionally comprises a casing exposed to the inlet of the body and containing a dilatable material having a high coefficient of thermal expansion, and a stem projecting from one end of the casing and displaceable axially with respect thereto starting from a retracted position towards progressively extended positions as a result of the dilation of the aforesaid dilatable material following upon increases in temperature within the inlet of the body. An open/close valve element carried by the stem controls the closing/opening of the first outlet and of the second outlet, and elastic means are provided for pressing the stem towards the retracted position.

Traditionally, thermostatic valves of this type are provided, in the condition where the stem of the thermostatic-valve unit is in the retracted condition, which corresponds to relatively low temperatures of the lubricating oil of the engine (typically at starting), for keeping the first outlet open and the second outlet closed so as to enable passage of the oil through the heat-exchange unit, which is typically formed by a heat-exchanger traversed by the liquid for heating the engine. In this way, in this first step the oil is heated by the coolant, the temperature of which rises more rapidly. As the lubricating oil is heated, the stem of the thermostatic-valve unit comes out progressively from the casing containing the thermally dilatable material, progressively closing the first outlet and progressively opening the second outlet as far as a position in which the first outlet is completely closed and the second outlet is completely open, so that the oil traverses exclusively the by-pass line, without traversing the heat-exchange unit.

With the current pressing demands for reduction of pollutant emissions by internal-combustion engines for motor vehicles, the producers of engines have found that appreciable improvements can be obtained precisely in terms of reduction of pollutant emissions in the case where, upon overstepping of the temperature corresponding to closing of the first outlet and opening of the second outlet, there is a further stage of partial opening of both of the outlets, followed by a last stage, in which the first outlet is again opened completely whilst the second outlet is in turn completely closed.

Current thermostatic valves are unable to provide an operating cycle of this sort, for which the use of a number of thermostatic valves or of other normally complicated technical solutions becomes therefore necessary.

US 4 512 300 shows a valve of the type according to the preamble of claim 1.

The purpose of the present invention is to provide a thermostatic valve of the type defined above, which is pre-arranged, in a way that is relatively simple from the constructional standpoint, for enabling the aforesaid operating mode.

According to the invention, this purpose is achieved thanks to the features according to claim 1.

In a preferred embodiment of the invention, the first and second outlets are both formed by a plurality of respective openings, and the open/close element is formed in a single piece with said set of three annular elements set on top of one another and joined to a central hollow body fixed coaxially on the stem of the valve.

The invention will now be described in detail with reference to the attached plate of drawings, which is provided purely by of way of non-limiting example, and in which:
- Figure 1 is a schematic side elevation of a thermostatic valve according to the invention;
- Figure 2 is an axial cross-sectional view according to the line II-II of Figure 1, with the thermostatic valve represented in a first stage of operation;
- Figures 3, 4, 5 and 6 are views similar to that of Figure 2 which illustrate the thermostatic valve in successive stages of operation; and
- Figure 7 is a perspective view at a larger scale of the drawer-type open/close element of the thermostatic valve.

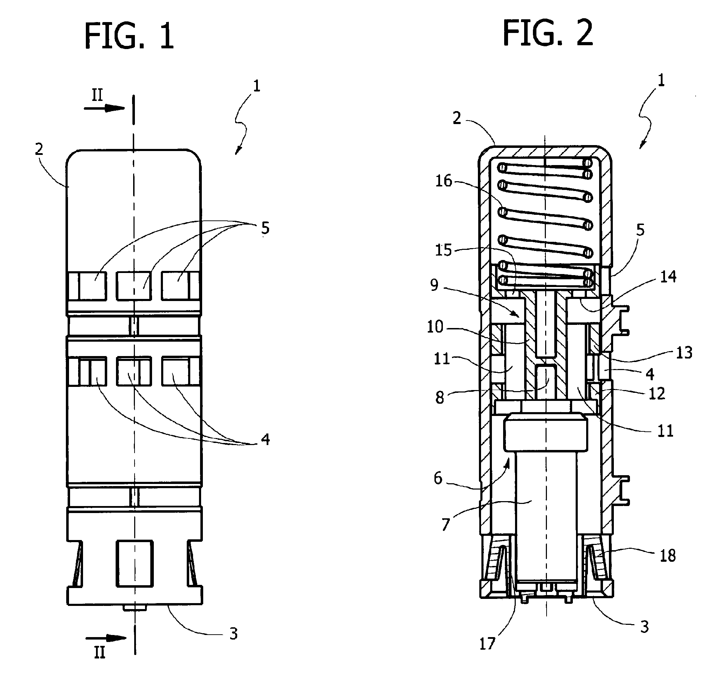

With initial reference to Figures 1 and 2, the thermostatic valve according to the invention comprises an elongated hollow body 1, of a generally cylindrical shape, closed at one end 2 and open at the opposite end, so as to define an axial inlet 3. The side wall of the body 1 is formed, in a position corresponding to a generally median area thereof, with a series of first openings 4 defining a first outlet, and with a series of second openings 5 defining a second outlet. The openings 4 of the first outlet are situated in a position axially proximal with respect to the inlet 3, and the openings 5 of the second outlet are situated in a position axially distal with respect to said inlet 3.

Coaxially housed within the body 1 is a thermostatic-valve unit, designated as a whole by 6 and including, in a way generally in itself known, a casing 7 that extends from the inlet 3 and contains a dilatable material (typically wax) having a high coefficient of thermal expansion. From the internal end of the casing 7 there comes out a stem 8 , which can slide axially and bears a drawer-type open/close valve element, designated as a whole by 9.

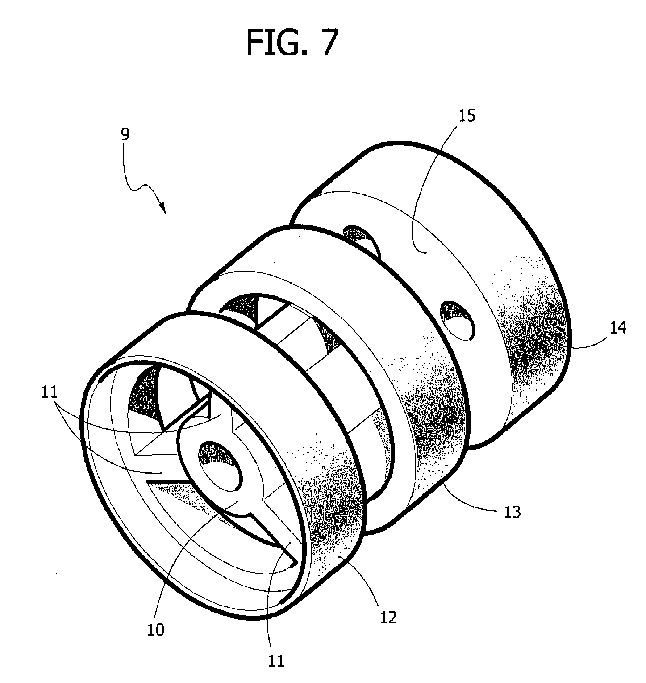

As is illustrated in greater detail in Figure 7, the drawer-type open/close element 9 is formed by a central hollow element 10 fixed on the free end of the stem 8 and joined, via a radiating formation of axial appendages 11, to a first annular element 12 and to a second annular element 13, which is set at an axial distance from the first annular element 12.

A third annular element 14, set at an axial distance from the second annular element 13, is joined to the free end of the central tubular element 10 and forms a cup 15 with a perforated base.

The first, second and third annular elements 12, 13 and 14 define a set of three open/close elements, which are in substantial sliding contact with the internal wall of the body 1 and are designed to co-operate, with the modalities clarified in what follows, with the openings 4 of the first outlet and with the openings 5 of the second outlet.

A helical compression spring 16 is set between the closed end 2 of the body 1 and the cup 15. Said spring 16 tends to press the stem 8 towards a retracted condition within the casing 7 of the thermostatic-valve unit 6, represented in Figure 2.

With reference now to Figures 2 to 6, there follows the description of operation of the thermostatic valve according to the invention.

In use, the inlet 3 of the body 1 is connected to a duct of a circuit for the lubricating oil of an internal-combustion engine for motor vehicles. The oil penetrates within the body 1 through the inlet 3 and the annular space 17 comprised between the end of the casing 7 facing said inlet 3 and an annular gasket 18.

The openings that define the first outlet 4 are connected to a heat-exchange unit, formed by a heat exchanger, within which the coolant of the engine circulates, whilst the second outlet defined by the openings 5 is connected to a by-pass line that returns directly to the engine.

Figure 2 illustrates, as has been said, the retracted condition of the stem 8 within the casing 7 of the thermostatic-valve unit 6. Said condition corresponds to a temperature of the lubricating oil of less than or equal to approximately 83 ± 2°C. In said condition, the annular elements 12 and 13 are situated on sides opposite to the first outlet 4, which is therefore kept open, whilst the open/close element 14 keeps the openings of the second outlet 5 closed. Consequently, the entire flow of lubricating oil entering from the inlet 3 is sent to the heat-exchange unit connected to the first outlet 4.

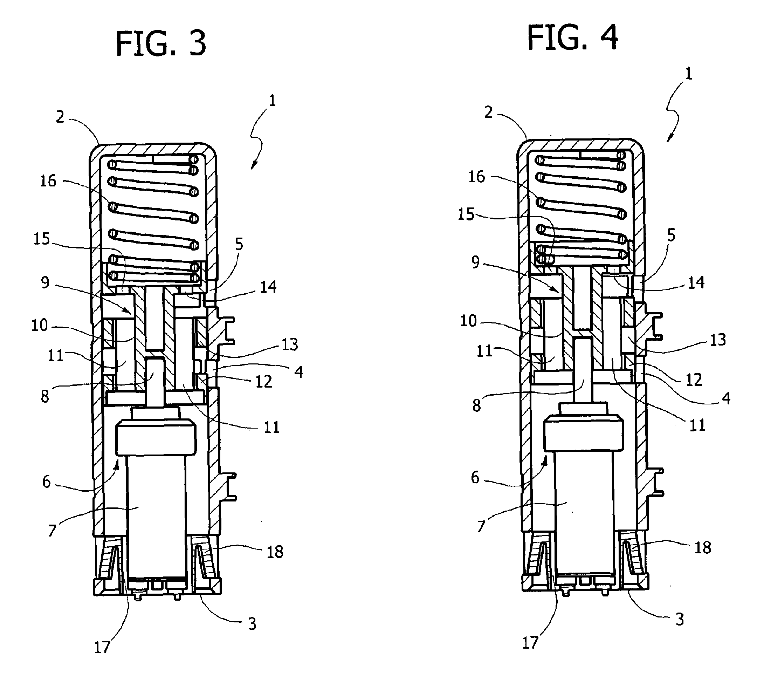

Following upon an increase in the temperature of the lubricating oil up to approximately 90 ± 2°C, the thermostatic valve sets itself in the condition represented in Figure 3. A first partial extension of the stem 8 due to the expansion of the material contained within the casing 6 causes displacement of the drawer 9 into a condition in which the annular elements 12 and 14 keep the flow of the lubricating oil partially open both through the first outlet 4 and through the second outlet 5.

Following upon a further increase in the temperature of the oil up to values in the region of 96 ± 2°C, the valve sets itself in the condition represented in Figure 4. The further partial extension of the stem 8 moves the drawer 9 into a condition in which the annular element 12 closes the first outlet 4 completely, whilst the second annular element 13 keeps the passage through the second outlet 5 substantially completely open.

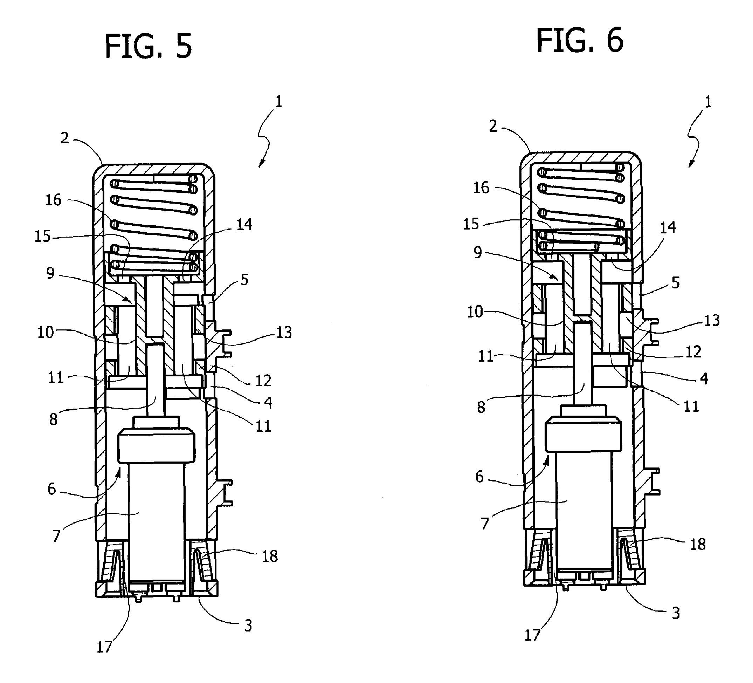

With a further increase of temperature up to values in the region of 125 ± 2°C, the thermostatic valve sets itself in the condition represented in Figure 5, in which the annular elements 12 and 13 keep the flow partially open both through the first outlet 4 and through the second outlet 5.

Figure 6 illustrates the condition of maximum extension of the stem 8 with respect to the casing 7 of the thermostatic-valve unit 6, corresponding to the attainment of temperatures in the region of 150 ± 2°C. In said condition, the first outlet 4 is substantially completely open, whilst the second outlet 5 is completely closed by the annular element 13.

Obviously, as the temperature of the lubricating oil decreases, the spring 16 will tend to restore the various conditions previously described with reference to Figures 5, 4, 3 and 2.

The thermostatic valve according to the invention thus enables, with a constructionally simple and relatively inexpensive embodiment, five stages of thermoregulation of the lubricating oil of an internal-combustion engine to be obtained with the maximum efficiency and precision with a bidirectional linear operation.

Of course, the details of construction and the embodiments may vary widely with respect to what is described and illustrated herein, without thereby departing from the scope of the present invention, as defined by the ensuing claims.

## Claims

1. A thermostatic valve for lubrication circuits of internal-combustion engines for motor vehicles, comprising: a body (1) having an inlet (3), and a first outlet (4) and a second outlet (5), which can be connected, respectively, to a heat-exchange unit and to a by-pass line; and a thermostatic-valve unit (6) set in said body (1) and including a casing (7) exposed to said inlet (3) and containing a dilatable material having a high coefficient of thermal expansion, a stem (8) projecting from one end of the casing (7) and being displaceable axially with respect to this starting from a retracted position, towards progressively extended positions as a result of the expansion of the aforesaid dilatable material following upon increases in temperature in said inlet (3), an open/close valve element (9) carried by said stem (8) for controlling the closing/opening of said first and second outlets (4, 5), and elastic means (16) tending to press said stem (8) towards the aforesaid retracted position, and
wherein said open/close valve element consists of a drawer (9), which can slide within the body (1) of the valve for providing a control sequence with five successive stages,
said thermostatic valve being **characterized in that**:
- said first and second outlets are formed -by side openings (4, 5) of said body (1) which are set, at only two respective axial positions which are axially proximal and axially distal, respectively, with respect to said inlet (3); and
- said drawer (9), has first, second and third annular elements (12, 13, 14), which are axially set on top of one another and at an axial distance from one another so as to provide said drawer (9) with two reciprocally axially distant side apertures, said first, second and third annular elements (12, 13, 14) of said drawer (9) co-operating with said openings of the first and second outlets (4, 5) whereby:
- in a first stage, corresponding to said retracted condition of said stem (8), said first outlet (4) is completely open and said second outlet (5) is completely closed by said third annular element (14);
- in a second stage, corresponding to a first condition of partial extension of said stem (8), said first and second outlets (4, 5) are both partially open;
- in a third stage, corresponding to a second condition of partial extension of said stem (8), said first outlet (4) is completely closed by said first annular element (12) and said second outlet (5) is substantially completely open;
- in a fourth stage, corresponding to a third condition of partial extension of said stem (8), said first and second outlets (4, 5) are both partially open; and
- in a fifth stage, corresponding to a condition of complete extension of said stem (8), said first outlet (4) is substantially completely open and said second outlet (5) is completely closed by said second annular element (13).

2. The thermostatic valve according to Claim 1, **characterized in that** said first stage corresponds to a temperature in said inlet (3) in the region of 83 ± 2°C.

3. The thermostatic valve according to Claim 1, **characterized in that** said second stage corresponds to a temperature in said inlet (3) in the region of 90 ± 2°C.

4. The thermostatic valve according to Claim 1, **characterized in that** said third stage corresponds to a temperature in said inlet (3) in the region of 96 ± 2°C.

5. The thermostatic valve according to Claim 1, **characterized in that** said fourth stage corresponds to a temperature in said inlet (3) in the region of 125 ± 2°C.

6. The thermostatic valve according to Claim 1, **characterized in that** said fifth stage corresponds to a temperature in said inlet (3) in the region of 150 ± 2°C.

7. The thermostatic valve according to one or more of the preceding claims, **characterized in that** the first and the second outlets are both formed by a plurality of respective openings (4, 5).

8. The thermostatic valve according to one or more of the preceding claims, **characterized in that** said drawer (9) is formed in a single piece with said set of three annular elements (12, 13, 14) set on top of one another joined to a central hollow body (10) fixed coaxially on said stem (8).

9. The thermostatic valve according to Claim 8, **characterized in that** said third annular element (14) of said drawer (9) defines a resting cup (15) for said elastic means (16).

## Patentansprüche

1. Thermostatventil für Schmierölkreise in Verbrennungsmotoren für Kraftfahrzeuge, wobei das Thermostatventil einen Körper (1), der einen Einlass (3) sowie einen ersten Auslass (4) und einen zweiten Auslass (5) besitzt, die mit einer Wärmetauschereinheit bzw. mit einer Umgehungsleitung verbunden werden können, sowie eine Thermostatventil-Einheit (6) enthält, die in den Körper (1) eingesetzt ist und die ein Gehäuse (7) aufweist, das dem Einlass (3) ausgesetzt ist und ein durch Wärme ausdehnbares Material enthält, das einen hohen Wärmeausdehnungskoeffizienten besitzt, und die einen Schaft (8) aufweist, der von einem Ende des Gehäuses (7) vorspringt und zu diesem, ausgehend von einer zurückgezogenen Stellung, zu immer weiter ausgefahrenen Stellungen axial ausgelenkt werden kann, wenn sich das durch Wärme ausdehnbare Material infolge eines Temperaturanstiegs im Einlass (3) ausdehnt, und die ein AUF/2U-Ventilelement (9) aufweist, das auf dem Schaft (8) sitzt, um das Öffnen/Schließen des ersten und des zweiten Auslasses (4, 5) zu steuern, und die eine elastische Einrichtung (16) aufweist, die versucht, den Schaft (8) zur zurückgezogenen Stellung zu drücken, und
wobei das AUF/ZU-Ventilelement aus einem Schieber (9) besteht, der im Körper (1) des Ventils verschiebbar ist, um eine Folge von Steuervorgängen mit fünf aufeinander folgenden Schritten zu liefern,
wobei das Thermostatventil **dadurch gekennzeichnet ist, dass**:
- der erste und der zweite Auslass von Seitenöffnungen (4, 5) des Körpers (1) gebildet werden, die an nur zwei entsprechenden axialen Stellen angeordnet sind, die axial nahe zum bzw. entfernt vom Einlass (3) liegen; und
- der Schieber (9) ein erstes, ein zweites und ein drittes ringförmiges Element (12, 13, 14) besitzt, die axial übereinander und in einem Axialabstand voneinander angeordnet sind, um den Schieber (9) mit zwei wechselseitig axial beabstandeten Seitenöffnungen zu versehen, wobei das erste, das zweite und das dritte ringförmige Element (12, 13, 14) des Schiebers (9) mit den Öffnungen des ersten und des zweiten Auslasses (4, 5) zusammenwirken, wodurch:
- in einem ersten Schritt, der dem zurückgezogenen Zustand des Schafts (8) entspricht, der erste Auslass (4) vollständig geöffnet ist und der zweite Auslass (5) mit dem dritten ringförmigen Element (14) vollständig geschlossen ist;
- in einem zweiten Schritt, der einem ersten Zustand entspricht, in dem der Schaft (8) teilweise ausgefahren ist, sowohl der erste als auch der zweite Auslass (4, 5) teilweise geöffnet sind;
- in einem dritten Schritt, der einem zweiten Zustand entspricht, in dem der Schaft (8) teilweise ausgefahren ist, der erste Auslass (4) mit dem ersten ringförmigen Element (12) vollständig geschlossen ist und der zweite Auslass (5) im Wesentlichen vollständig geöffnet ist;
- in einem vierten Schritt, der einem dritten Zustand entspricht, in dem der Schaft (8) teilweise ausgefahren ist, sowohl der erste als auch der zweite Auslass (4, 5) teilweise geöffnet sind; und
- in einem fünften Schritt, der einem Zustand entspricht, in dem der Schaft (8) vollständig ausgefahren ist, der erste Auslass (4) im Wesentlichen vollständig geöffnet ist und der zweite Auslass (5) mit dem zweiten ringförmigen Element (13) vollständig geschlossen ist.

2. Thermostatventil gemäß Anspruch 1, **dadurch gekennzeichnet, dass** der erste Schritt einer Temperatur im Einlass (3) entspricht, die im Bereich von 83 ± 2 °C liegt.

3. Thermostatventil gemäß Anspruch 1, **dadurch gekennzeichnet, dass** der zweite Schritt einer Temperatur im Einlass (3) entspricht, die im Bereich von 90 ± 2 °C liegt.

4. Thermostatventil gemäß Anspruch 1, **dadurch gekennzeichnet, dass** der dritte Schritt einer Temperatur im Einlass (3) entspricht, die im Bereich von 96 ± 2 °C liegt.

5. Thermostatventil gemäß Anspruch 1, **dadurch gekennzeichnet, dass** der vierte Schritt einer Temperatur im Einlass (3) entspricht, die im Bereich von 125 ± 2 °C liegt.

6. Thermostatventil gemäß Anspruch 1, **dadurch gekennzeichnet, dass** der fünfte Schritt einer Temperatur im Einlass (3) entspricht, die im Bereich von 150 ± 2 °C liegt.

7. Thermostatventil gemäß einem oder mehreren der bisherigen Ansprüche, **dadurch gekennzeichnet, dass** sowohl erste als auch der zweite Auslass von einer Vielzahl von entsprechenden Öffnungen (4, 5) gebildet werden.

8. Thermostatventil gemäß einem oder mehreren der bisherigen Ansprüche, **dadurch gekennzeichnet, dass** der Schieber (9) aus einem einzigen Stück mit der Baueinheit aus den drei ringförmigen Elementen (12, 13, 14) gebildet wird, die übereinander mit einem mittigen, hohlen Körper (10) verbunden sind, der koaxial am Schaft (8) angebracht ist.

9. Thermostatventil gemäß Anspruch (8), **dadurch gekennzeichnet, dass** das dritte ringförmige Element (14) des Schiebers (9) eine Auflageschale (15) für die elastische Einrichtung (16) bildet.

## Revendications

1. Soupape thermostatique pour circuits de lubrification de moteurs à combustion interne pour véhicules à moteur, comprenant : un corps (1) ayant une entrée (3), et une première sortie (4) et une seconde sortie (5), qui peuvent être raccordées, respectivement, à une unité d'échange de chaleur et à une conduite de dérivation ; et une unité de soupape thermostatique (6) ajustée dans ledit corps (1) et comprenant un logement (7) exposé à ladite entrée (3) et contenant un matériau dilatable ayant un coefficient élevé de dilatation thermique, une tige (8) faisant saillie d'une extrémité du logement (7) et pouvant être déplacée axialement par rapport à celui-ci en partant d'une position rétractée vers des positions progressivement déployées en raison de la dilatation du matériau dilatable mentionné ci-dessus à la suite d'augmentations de température de ladite entrée (3), un élément de soupape d'ouverture/fermeture (9) porté par ladite tige (8) pour commander la fermeture/ouverture desdites première et seconde sorties (4, 5), et un moyen élastique (16) tendant à presser ladite tige (8) vers la position rétractée mentionnée ci-dessus, et
dans laquelle ledit élément de soupape d'ouverture/fermeture est constitué d'un tiroir (9), qui peut coulisser dans le corps (1) de la soupape pour fournir une séquence de commande avec cinq étapes successives,
ladite soupape thermoplastique étant **caractérisée en ce que** :
- lesdites première et seconde sorties sont formées par des ouvertures latérales (4, 5) dudit corps (1) qui sont ménagées uniquement dans deux positions axiales respectives, qui sont axialement proximale et axialement distale, respectivement, par rapport à ladite entrée (3) ; et
- ledit tiroir (9) a des premier, deuxième et troisième éléments annulaires (12, 13, 14) qui sont axialement disposés l'un par-dessus l'autre et à une distance axiale l'un de l'autre de manière à doter ledit tiroir (9) de deux ouverture latérales axialement distantes mutuellement, lesdits premier, deuxième et troisième éléments annulaires (12, 13, 14) dudit tiroir (9) coopérant avec lesdites ouvertures des première et seconde sorties (4, 5) de sorte que :
- dans une première étape, correspondant audit état rétracté de ladite tige (8), ladite première sortie (4) soit complètement ouverte et ladite deuxième sortie (5) complètement fermée par ledit troisième élément annulaire (14) ;
- dans une deuxième étape, correspondant audit premier état d'extension partielle de ladite tige (8), lesdites première et seconde sorties (4, 5) soient toutes deux partiellement ouvertes ;
- dans une troisième étape, correspondant à un deuxième état d'extension partielle de ladite tige (8), ladite première sortie (4) soit complètement fermée par ledit premier élément annulaire (12) et ladite deuxième sortie (5) sensiblement complètement ouverte ;
- dans une quatrième étape, correspondant à un troisième état d'extension partielle de ladite tige (8), lesdites première et seconde sorties (4, 5) soient toutes deux partiellement ouvertes ; et
- dans une cinquième étape, correspondant à un état d'extension complète de ladite tige (8), ladite première sortie (4) soit sensiblement complètement ouverte et ladite deuxième sortie (5) complètement fermée par ledit deuxième élément annulaire (13).

2. Soupape thermostatique selon la revendication 1, **caractérisée en ce que** ladite première étape correspond à une température de ladite entrée (3) dans la région de 83 ± 2 °C.

3. Soupape thermostatique selon la revendication 1, **caractérisée en ce que** ladite seconde étape correspond à une température de ladite entrée (3) dans la région de 90 ± 2 °C.

4. Soupape thermostatique selon la revendication 1, **caractérisée en ce que** ladite troisième étape correspond à une température de ladite entrée (3) dans la région de 96 ± 2 °C.

5. Soupape thermostatique selon la revendication 1, **caractérisée en ce que** ladite quatrième étape correspond à une température de ladite entrée (3) dans la région de 125 ± 2 °C.

6. Soupape thermostatique selon la revendication 1, **caractérisée en ce que** ladite cinquième étape correspond à une température de ladite entrée (3) dans la région de 150 ± 2 °C.

7. Soupape thermostatique selon une ou plusieurs des revendications précédentes, **caractérisée en ce que** les première et seconde sorties sont toutes deux formées par une pluralité d'ouvertures respectives (4, 5).

8. Soupape thermostatique selon une ou plusieurs des revendications précédentes, **caractérisée en ce que** ledit tiroir (9) est formé d'une seule pièce avec ledit ensemble de trois éléments annulaires (12, 13, 14) placés l'un par-dessus l'autre joints à un corps creux central (10) fixé coaxialement sur ladite tige (8).

9. Soupape thermostatique selon la revendication 8, **caractérisée en ce que** ledit troisième élément annulaire (14) dudit tiroir (9) définit une coupelle de repos (15) pour ledit moyen élastique (16).
